# EUROPEAN PATENT SPECIFICATION

(11) **EP 2 905 942 B1**
(45) Date of publication and mention of the grant of the patent: **16.01.2019**
(21) Application number: 13850877.5
(22) Date of filing: 28.08.2013
(51) Int. Cl.: H04L 29/08, H04W 4/50, H04W 4/60, G06F 8/60

(54) **APPLICATION POPULARIZATION METHOD, DEVICE AND SYSTEM**
VERFAHREN, VORRICHTUNG UND SYSTEM ZUR ANWENDUNGSBEVÖLKERUNG
PROCÉDÉ, DISPOSITIF ET SYSTÈME DE POPULATION D'APPLICATIONS

(30) Priority: 29.10.2012 CN 201210419523
(43) Date of publication of application: 12.08.2015
(73) Proprietor: ZTE Corporation, Shenzhen, Guangdong 518057 (CN)
(72) Inventor: FAN, Xuhua, Shenzhen Guangdong 518057 (CN)
(74) Representative: Markfort, Iris-Anne Lucie
(86) International application number: PCT/CN2013/082492
(87) International publication number: WO 2014/067333

(56) References cited:
- EP-A1- 2 288 113
- EP-A2- 1 130 495
- WO-A1-2008/017907
- WO-A1-2010/075890
- CN-A- 102 163 311
- CN-A- 102 546 605
- US-A1- 2008 301 231

## Description

### TECHNICAL FIELD

The disclosure relates to the field of a terminal application, and in particular to an application popularization method, an application popularization device, and an application popularization system.

### BACKGROUND

With the development of a mobile phone and other mobile terminals and the mobile Internet technology, there are more and more various mobile terminal applications; mobile terminal manufactures, mobile operators and Internet providers present application stores including the mobile terminal applications provided by them one after another, such as App Store provided by Apple Inc., mobile MM provided by China Mobile, and Google Play provided by Google Inc.; the appearance of these application stores is also convenient for a mobile terminal user to quickly find a needed mobile terminal application while providing a large number of mobile terminal applications for the user, thereby improving satisfaction of the mobile terminal user.

Currently, the mobile terminal accesses the application store provided by its application provider mainly through a World Wide Web (WWW) or a Wireless Application Protocol (WAP) network; the requirement of such mobile terminal application acquiring or popularizing mode for the WWW and/or WAP communication network is too high, so it is necessary to keep the communication network in connection; if the communication network is instable or there is no communication network, the user cannot use various mobile terminal applications provided in the application store, thereby degrading the usage experience of the user.

Thus, the problem to be solved by those skilled in the art is how to provide an application popularization solution for solving the problem that the current application popularization mode of mobile terminal has high dependency on a network.

According to EP 2 288 113 A1, an application downloading method, an application providing method, and a user terminal using the same are provided. According to the application downloading method, a user terminal (100) transmits user terminal information to a server (S130), receives an application list generated based on the user terminal information (S180), and display the received application list on a screen (S190). Accordingly, the user can download a desired application more easily and simply.

According to US 2008 0301231 A1, computer- and network-based methods and systems for maintaining and provisioning wireless applications are provided. Example embodiments provide a Mobile Application System (MAS), which is a collection of interoperating server components that work individually and together in a secure fashion to provide applications and resources to mobile subscriber devices, such as wireless devices. Embodiments of the present invention can also be used to deploy applications and resources for wired subscriber devices. Application, resources, and other content is provisioned and verified by the MAS for authorized access by the subscriber, compatibility with a requesting subscriber device, and the security and billing policies of the carrier and system administrators of the MAS. In this manner, applications, resources, and other content can be downloaded to devices, such as wireless devices, with greater assurance of their ability to successfully execute. In one embodiment, content is provisioned by one or more of the steps of inspecting the content for malicious or banned code, optimizing the content for smaller size and greater speed, instrumentation of code that implements security, billing, and other carrier policies, and packaging of code for the intended subscriber device. Additional security is provided through application filters that are used to prevent applications that contain designated API from being downloaded to a subscriber's device. In one embodiment, the MAS includes a Protocol Manager, Provisioning Manager, Cache, Deployment Manager, Billing Manager, Logging Manager, Administrator, and Heartbeat Monitor, which interoperate to provide the provisioning functions.

According to EP 1 130 495 A2, apparatus, and associated method, provides for downloading an application with a selectable lifetime from an application database to a mobile terminal. The mobile terminal user's identification information and the selected lifetime for the application are stored in an application-license database. When the user seeks to download the same application on a subsequent occasion the user is able to download that application for a reduced fee if lifetime remains from when the application was first downloaded. In addition, the application may be configured to delete or uninstall itself from the mobile terminal when the selected lifetime for the application expires.

According to WO 2008 017907 A1, an application download server (10) comprises a download request object (25) and a configuration parameter object (26). The download request object receives a download request from a remote terminal (18). The download request identifies a requested application for download to the remote terminal. The configuration parameter object returns a configured application package (14) to the remote terminal (18). The configured application package (14) comprises installation files (15) corresponding to the requested application and configuration files (16). The configuration files comprise a parameter value for each of a plurality of configuration parameters needed for operation of the requested application on the remote terminal.

### SUMMARY

For solving the problem of high communication network dependency of existing application popularization modes, the disclosure provides an application popularization method, an application popularization device and an application popularization system, which can solve the problem in existing application popularization technologies that a mobile terminal has high dependency on a communication network when acquiring applications.

The features of the method and device according to the present disclosure are defined in the independent claims, and the preferable features according to the present invention are defined in the dependent claims.

By the implementation of embodiments of the disclosure, an application popularization technology is provided; in such technology, a mobile terminal can send, via a PC client, an application request to an application popularization device which pre-stores a certain number of applications, the application popularization device sends found application information to the PC client after receiving the application request, and the PC client downloads applications according to the application information and sends the applications to the mobile terminal for use, thereby solving the problem in existing application popularization technologies that the mobile terminal has high dependency on a network when acquiring the applications through the WAP and other networks; furthermore, the embodiments of the disclosure can update the applications not stored in the application popularization device in real time, which is convenient for a user to acquire applications when requesting the next time, thereby improving the usage experience of the user.

### BRIEF DESCRIPTION OF THE DRAWINGS

Fig. 1 is a structural diagram of an application popularization system 1 in an embodiment of the disclosure;
Fig. 2 is a structural diagram of a first embodiment of an application popularization device 11 in Fig. 1 of the disclosure;
Fig. 3 is a structural diagram of a second embodiment of an application popularization device 11 in Fig. 1 of the disclosure;
Fig. 4 is a structural diagram of a third embodiment of an application popularization device 11 in Fig. 1 of the disclosure;
Fig. 5 is a structural diagram of a fourth embodiment of an application popularization device 11 in Fig. 1 of the disclosure;
Fig. 6 is a flowchart of an application popularization method in an embodiment of the disclosure;
Fig. 7 is a structural diagram of an application popularization device 11 in a best embodiment of the disclosure; and
Fig. 8 is a flowchart of an application popularization method in a best embodiment of the disclosure.

### DETAILED DESCRIPTION

Currently, a mobile terminal acquires an application provided by an application store mainly through a WWW/WAP network; such application popularization mode has high dependency on the network, so the disclosure provides an application popularization mode based on data pre-storage; by pre-storing the application provided by the application store in a local application popularization device, when sending a request through a PC client, the mobile terminal can directly feed application information stored by the application popularization device back to the PC client, and then the PC client transmits the application downloaded according to the application information to the mobile terminal, so that the mobile terminal does not need to access the application store directly through the WWW/WAP network, that is, the problem of high network dependency of existing application popularization technologies is solved. Embodiments of the disclosure are further illustrated below in combination with specific implementation modes and the drawings.

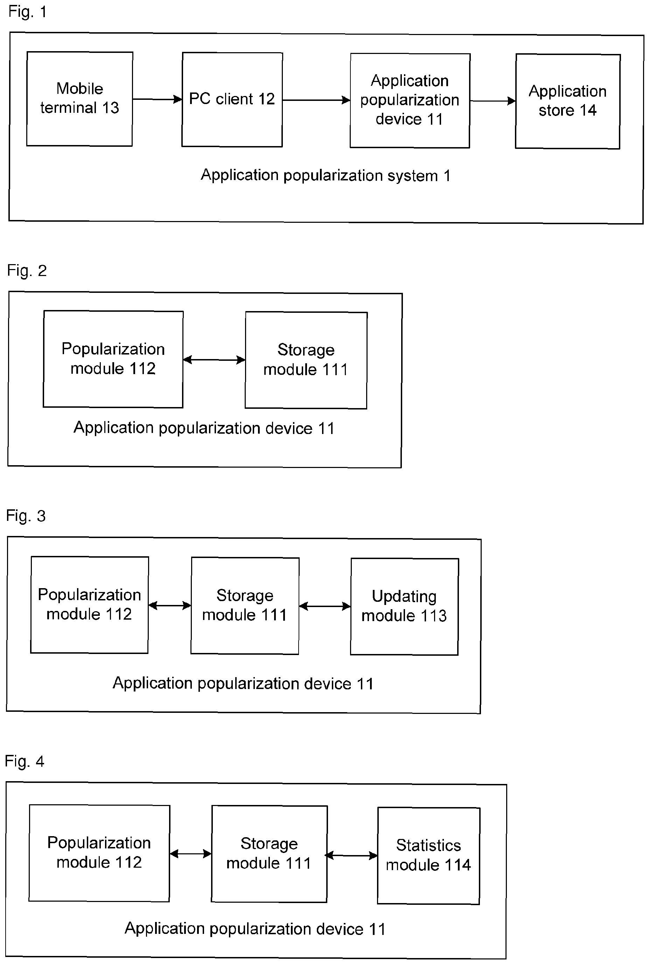

Fig. 1 is a structural diagram of an application popularization system 1 in an embodiment of the disclosure; it can be seen from Fig. 1 that, in this embodiment, the application popularization system 1 according to the disclosure includes an application popularization device 11, at least one PC client 12, at least one mobile terminal 13 connected with the PC client 12, and at least one application store 14 providing an application; wherein,
the mobile terminal 13 is configured to use the application; it can be the current mainstream mobile terminal device, such as a smart phone and PAD; a mode of connection between it and the PC client 12 may be USB data cable communication, infrared communication, Bluetooth communication and so on;
the PC client 12 is configured to identify the mobile terminal 13 connected with it, to acquire mobile terminal information of the mobile terminal 13, and to send an application request to the application popularization device 11 according to the acquired mobile terminal information; the mobile terminal information of the mobile terminal may be a manufacturer of the mobile terminal, a model of the terminal device, a work platform of the terminal, for example, an Android system, and so on; after the PC client 12 acquires the information, it determines, according to needs of a user and/or setting of the PC client 12, a type, a name and an edition of the application that the mobile terminal needs to acquire and other applications needed to be downloaded, so as to generate the application request; the application request is configured to request the application popularization device 11 for acquiring application information corresponding to the application determined by the PC client 12, wherein the application information includes a download address of the application and other information; the application request includes edition and other parameters of the mobile terminal 13;
the application store 14 is configured to provide the user with an application download of application services;
the application popularization device 11 is configured to receive the application request sent from the PC client 12, and to feed, according to the parameters in the application request, the queried application information corresponding to the application which matches with the application request back to the PC client 12, so that the PC client 12 downloads the application according to the application information, and transmits the downloaded application to the mobile terminal 13 for use.

In the above embodiment, the application popularization device 11 is only illustrated summarily; the structure of the application popularization device 11 is further illustrated below in combination with the drawings.

Fig. 2 is a structural diagram of a first embodiment of an application popularization device 11 in Fig. 1 of the disclosure; it can be seen from Fig. 2 that:
in an embodiment, the application popularization device 11 according to the disclosure includes: a storage module 111 and a popularization module 112; wherein,
the storage module 111 is configured to store a certain number of applications provided by an application store and application information corresponding to the applications for the popularization module 112 to query and use;
a specific mode of storing the application by the storage module 111 may be storing basic information of the application, such as a name of the application, a name of the application supplier, a platform of running the application, charge information of the application, the application ontology, such as package content of the application, an association relationship between the application and the mobile terminal, such as requirements of a package for the mobile terminal device, and other application service information, and then storing these information in one-to-one correspondence according to a logical relationship;
the popularization module 112 is configured to receive the application request sent from the PC client 12, wherein the application request is generated by the PC client 12 according to the mobile terminal information of the mobile terminal 13 connected with it; the popularization module is further configured to detect according to the application request whether the storage module 111 stores the application matching with the application request; if yes, it is configured to send the application information of the application to the PC client 12, wherein the application information is used for the PC client 12 to acquire and forward the application to the mobile terminal 13;
specifically, the popularization module 112 determines whether there is the application matching with the application request according to parameters in the application request, the applications stored in the storage module 111 and the application service information in the application information; if yes, it is considered that the storage module 111 stores the application matching with the application request; otherwise, there is no application matching with the application request; here, the matching may be either exact matching or fuzzy matching; the exact matching means the matching is considered to be successful only when the parameters of both, such as the model of mobile terminal device and the application platform, are completely consistent; the fuzzy matching means the matching is considered to be successful as long as one or more of all the parameters match.

In the above embodiment, if the storage module 111 does not store the application needed by the user, the popularization module 112 feeds a corresponding error code back to the PC client 12 to indicate that there is no application which is requested by it stored.

Because the user's needs are personalized, a situation that the storage module 111 in the application popularization device 11 does not store the application needed by the user in advance occurs occasionally; for meeting the user's personalized needs, the disclosure adds an application updating function on basis of the above embodiment, see the embodiment below.

Fig. 3 is a structural diagram of a second embodiment of the application popularization device 11 in the application popularization system 1 shown in Fig. 1; it can be seen from Fig. 3 that:
the embodiment adds an updating module 113 on basis of the embodiment shown in Fig. 2; the updating module 113 is configured, when the storage module 111 does not store the application corresponding to the application request, to send the application download request of the application to the application store 14, to download the application according to the application information corresponding to the application fed back by the application store 14, and to transmit the application to the storage module 111 to store; the storage module 111 is further configured to store the application downloaded by the updating module 113.

Specifically, when the popularization module 112 does not find the matching application in the storage module 111, it informs the updating module 113 to execute the application updating function; the updating module 113 sends the application download request of the application corresponding to the application request to the application store 14 according to the application request sent from the PC client 12; when the application store 14 receives the application download request, it feeds download information of the application back to the updating module 113, and then the updating module 113 downloads according to the download information the corresponding application and the application service information of the application from a corresponding website, for example, an internal network of the application store; the updating module 113 transmits the downloaded application and the application service information of the application to the storage module 111 to store, so as to feed the application information of the application back to the PC client 12 when accepting the application request of the application again.

The application popularization device 11 shown in the above two embodiments achieves an application popularizing and updating function; for facilitating statistics of usage of the application popularization device 11, the disclosure adds a statistics function on basis of the above embodiments, see the embodiment below.

Fig. 4 is a structural diagram of a third embodiment of the application popularization device 11 in the application popularization system 1 shown in Fig. 1; it can be seen from Fig. 4 that:
the embodiment adds a statistics module 114 based on Fig. 2; the statistics module 114 is configured, after the popularization module 112 sends the application information of the application to the PC client 12, to update the application download information of the application, wherein the application download information includes downloads information of the application, download time distribution and so on.

Predictably, in other embodiments, the statistics module 114 in the above embodiment may also be added in the application popularization device 11 shown in Fig. 3; the structural diagram of the embodiment is not drawn; at this point, the statistics module 114 is further configured, after the updating module 113 downloads the application, to update an application list of the application stored by the storage module 111.

To be convenient for an application popularization system administrator to manage the application popularization device 11, the disclosure adds a managing function on basis of the above embodiments, see the embodiment below.

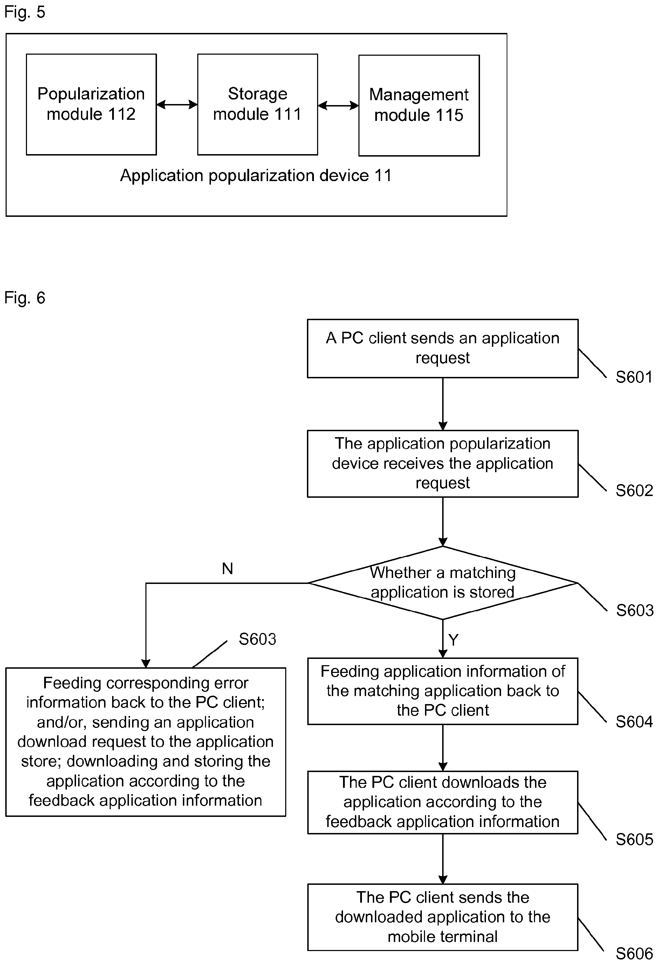

Fig. 5 is a structural diagram of a fourth embodiment of the application popularization device 11 in the application popularization system 1 shown in Fig. 1; it can be seen from Fig. 5 that:
the embodiment adds a management module 115 based on Fig. 2; the management module 115 is configured to receive a storage query request of an application popularization system administrator for querying the application storage of the storage module 111 in the application popularization device 11, and to display the application list of all the applications stored by the storage module 111 according to the storage query request; for facilitating contrastive illustration, in the embodiment, the management module 115 is called the first management module, which is not marked in Fig. 5.

Predictably, in other embodiments, the management module 115 in the above embodiment can also be added in the application popularization device 11 shown in Fig. 4; the structural diagram of the embodiment is not drawn; at this point, the management module 115 is further configured to receive a download query request for querying the application download, and to display the application download information of all the applications obtained by the statistics module 114 according to the download query request; for facilitating contrastive illustration, in the embodiment, the management module 115 is called the second management module, which is not marked in Fig. 5.

Predictably, these functional modules in all the embodiments can be combined with each other and/or used in place of one another on condition of not conflicting, for example, the first management module and the second management module are combined, and then they are collectively called the management module 115 to implement multiple management functions; all implementation modes of forming it belong to the technical solutions documented by the disclosure.

Besides, the disclosure also provides an application popularization method; in an embodiment, its flow is shown in Fig. 6; it can be seen from Fig. 6 that in the embodiment, the application popularization method according to the disclosure includes the following steps.
Step 601: A PC client generates and sends an application request of an application;
   here, the PC client generates the application request according to acquired mobile terminal information of a mobile terminal connected with it, wherein the application request includes matching parameters of the mobile terminal.
Step 602: The application popularization device receives the application request;
   specifically, the popularization module in the application popularization device receives the application request sent from the PC client.
Step 603: Detecting whether a matching application is stored; if yes, executing step 604;
   specifically, the popularization module in the application popularization device compares the matching parameters of the mobile terminal which are included in the application request with the application service information of all the applications which are stored in the storage module; when comparison is successful, it is considered that the application matches with the application request sent from the PC client.
Step 604: Feeding application information corresponding to the matching application back to the PC client.
Step 605: The PC client downloads the application according to the feedback application information.
Step 606: The PC client sends the downloaded application to the mobile terminal, and then the flow ends.

In other embodiments, the application popularization method in the above embodiment further includes the following steps:
if a detection result of step 603 is that: there is no application matching with the application request stored, executing the following steps:
feeding corresponding error information back to the PC client to explain a cause of an error; and/or, sending an application download request of the application to the application store;
according to the application information corresponding to the application which is fed back by the application store, downloading and storing the application.

In other embodiments, after downloading and storing the application, the application popularization method in the above embodiment further includes the following step: updating and storing application number information of the application.

In other embodiments, after sending the application information of the application to the PC client, the application popularization method in the above embodiment further includes the following step: updating application download information of the application.

In other embodiments, the application popularization method in the above embodiment further includes the following step:
receiving a query request for querying the application stored; and
according to the query request, displaying all the application information stored.

The application popularization method can also further include: displaying the application download information of the application.

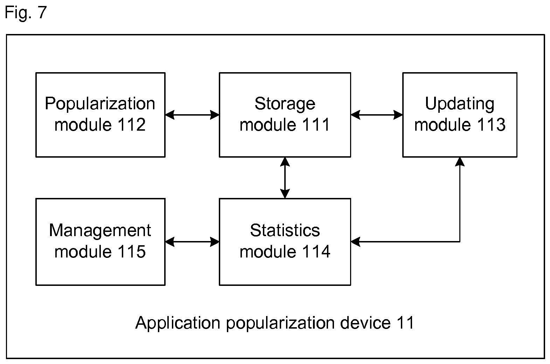

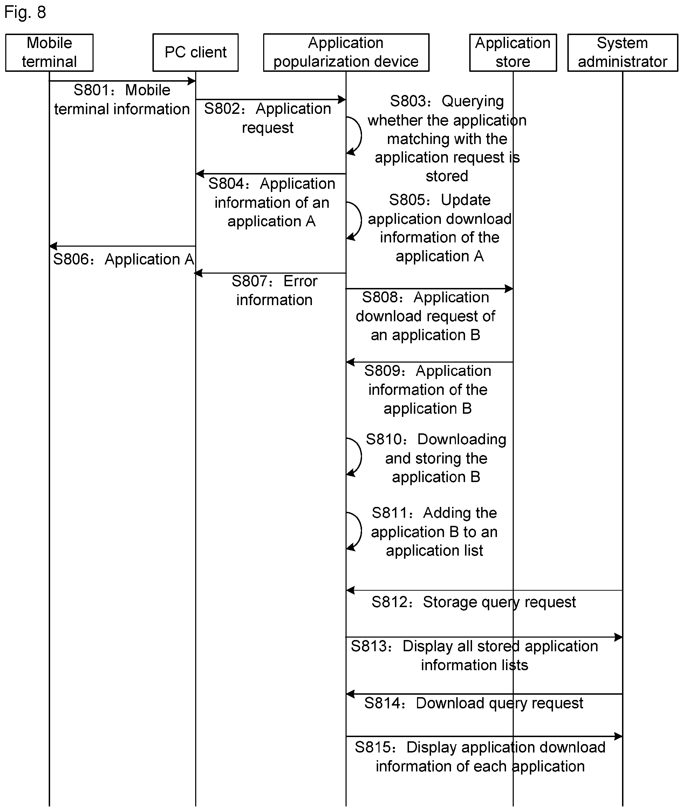

To further illustrate the idea of the disclosure, illustration is given below in combination with living examples and Fig. 7 and Fig. 8.

Fig. 7 is a structural diagram of the application popularization device in a best embodiment of the disclosure; Fig. 8 is a flowchart of the application popularization method in a best embodiment of the disclosure; it can be seen from Fig. 7 that in the embodiment, the application popularization device 11 includes a storage module 111, a popularization module 112, an updating module 113, a statistics module 114 and a management module 115 which are connected with each other; the function of each module is the same as that of the above embodiments, so it will not be repeated here; Fig. 8 is a flowchart of utilizing the application popularization system 1 including the application popularization device 11 shown in Fig. 7 to work, the flow is elaborated as follows.
Step 801: A PC client acquires mobile terminal information of a mobile terminal.
Step 802: The PC client generates and sends an application request to an application popularization device according to the mobile terminal information;
   for facilitating subsequent description, it is assumed here that the PC client generates two application requests, namely an application request 1 corresponding to an application A, and an application request 2 corresponding to an application B.
Step 803: The application popularization device receives the application request, and queries whether an application matching with the application request is stored; if yes, executing step 804; otherwise, executing step 807;
   here, it is set that the application popularization device stores the application A and does not store the application B.
Step 804: The application popularization device feeds application information of the application A back to the PC client.
Step 805: The application popularization device updates application download information of the application A.
Step 806: The PC client acquires, according to the received application information, a download address for downloading the application A, and downloads and transmits the application A to the mobile terminal; the flow ends.
Step 807: The application popularization device feeds error information back to the PC client to show that it does not store the application B currently.
Step 808: The application popularization device sends an application download request of the application B to an application store.
Step 809: The application store feeds application information of the application B back to the application popularization device.
Step 810: The application popularization device downloads and stores the application B according to the application information of the application B, so as to execute step 804 to step 806 to the application B when receiving the application request of the application B again; the flow ends.
Step 811: The application popularization device updates and stores application number information of the application, and adds the application B to an application list.
Step 812: The application popularization device receives a storage query request for querying the application stored by the storage module, wherein the storage query request is initiated by an application popularization system administrator.
Step 813: The application popularization device displays all the stored application information lists according to the query request; the flow ends.
Step 814: The application popularization device receives a download query request for querying the application download, wherein the download query request is initiated by the application popularization system administrator.
Step 815: The application popularization device displays the application download information of the applications according to the download query request; the flow ends.

The above embodiment is only a best embodiment for illustrating the idea of the disclosure; in practical application, step 804 and step 805 are not ordered, step 812 and step 814 are not ordered too, or even just one step is executed; thus, in a specific application of the disclosure, it is feasible to select one or multiple steps to execute according to need.

From the above documented solutions, the following remarkable progresses are at least made through implementation of this application:
the mobile terminal does not need to access the application store through the WWW/WAP network, which decreases a requirement of the application popularization technology for network connection;
by pre-storing various applications and providing these applications to the mobile terminal, it is avoided that the mobile terminal acquires the application information completely from the application store, and operation burden of the application store is reduced;
by sending the application request through the PC client, the requirement for processing performance of the mobile terminal is decreased; and
the statistics and/or management function is provided, which is convenient for the popularization personnel to conduct statistics of data and management of the application.

The above is only the specific implementation mode of the disclosure and not intended to limit any form of the disclosure; the scope of the invention is defined by the appended claims, only.

## Claims

1. An application popularization method, **characterized in that** the method comprises:
pre-storing, by an application popularization device, applications provided by an application store;
receiving, by the application popularization device, an application request sent from a Personal Computer, PC, client, wherein the application request is generated by the PC client according to mobile terminal information of a mobile terminal connected with the PC client to determine an application that the mobile terminal needs to acquire;
detecting, by the application popularization device, according to the application request whether an application matching with the application request is stored in the application popularization device;
when the application is stored in the application popularization device, then sending, by the application popularization device, application information of the application to the PC client, wherein the application information is used for the PC client to acquire and forward the stored application to the mobile terminal;
wherein the application request includes matching parameters of the mobile terminal, and the step of detecting, by the application popularization device, according to the application request, whether an application matching with the application request is stored in the application popularization device comprises:
comparing, by the application popularization device, the matching parameters of the mobile terminal in the application request with application information of all applications which are stored in the application popularization device; when the comparison is successful by finding a matching application stored in the application popularization device as a result of the comparison, determining, by the application popularization device, that the application matching with the application request is stored in the application popularization device.

2. The application popularization method according to claim 1, further comprising:
when the application corresponding to the application request is not stored in the application population device, sending, by the application popularization device, an application download request of the application to the application store; and
according to the application information of the application fed back by the application store, downloading and storing, by the application popularization device, the application.

3. The application popularization method according to claim 2, further comprising:
after downloading and storing the application, updating and storing, by the application popularization device, an application list of the application.

4. The application popularization method according to claim 1, further comprising:
after sending application information of the application to the PC client, updating, by the application popularization device, application download information of the application.

5. The application popularization method according to any one of claims 1 to 4, further comprising:
Receiving, by the application popularization device, a storage query request for querying an application storage capacity; and
according to the storage query request, displaying, by the application popularization device, all the stored application lists.

6. The application popularization method according to any one of claims 1 to 4, further comprising:
Receiving, by the application popularization device, a download query request for querying an application download; and
according to the download query request, displaying, by the application popularization device, application download information of all the applications.

7. An application popularization device (11), **characterized in that** the device comprises: a popularization module (112) and a storage module (111);
the popularization module (112) is configured to receive an application request sent from a Personal Computer, PC, client, wherein the application request is generated by the PC client according to mobile terminal information of a mobile terminal connected with the PC client to determine an application that the mobile terminal needs to acquire; the popularization module (112) is further configured to detect according to the application request whether the storage module (111) stores an application matching with the application request; when the application is stored in the storage module (111), to send application information of the application to the PC client; and
the storage module (111) is configured to locally pre-store applications provided by an application store and application information of each application, wherein the application information is used for the PC client to acquire and forward the stored application to the mobile terminal;
wherein the application request includes matching parameters of the mobile terminal, and the popularization module (112) is further configured, when detecting according to the application request, whether the storage module (111) stores an application matching with the application request, to compare the matching parameters of the mobile terminal in the application request with application information of all applications which are stored in the storage module (111); and to determine that the application matching with the application request is stored in the storage module (111) when the comparison is successful by finding a matching application stored in the storage module (111) as a result of the comparison.

8. The application popularization device (11) according to claim 7, further comprising an updating module (113);
the updating module (113) is configured, when the storage module (111) does not store the application corresponding to the application request, to send an application download request of the application to the application store, to download and transmit the application to the storage module (111) according to the application information of the application fed back by the application store;
correspondingly, the storage module (111) is further configured to store the application transmitted by the updating module (113).

9. The application popularization device (11) according to claim 8, further comprising a statistics module (114);
the statistics module (114) is configured, after the updating module (113) downloads the application, to update an application list of the application stored by the storage module (111).

10. The application popularization device (11) according to claim 9, wherein the statistics module (114) is further configured, after the popularization module (112) sends the application information of the application to the PC client, to update application download information of the application.

11. The application popularization device (11) according to any one of claims 7 to 10, further comprising: a first management module;
the first management module is configured to receive a storage query request for querying an application storage capacity, and to display all application lists stored by the storage module (111) according to the storage query request.

12. The application popularization device (11) according to any one of claims 7 to 10, further comprising: a second management module;
the second management module is configured to receive a download query request for querying an application download, and to display application download information of all the applications according to the download query request.

13. An application popularization system (1), **characterized in that** the system comprises: at least one mobile terminal (13) using an application, at least one Personal Computer, PC, client (12) and at least one application store (14) providing the application; further comprising: an application popularization device (11) according to any one of claims 7 to 12.

## Patentansprüche

1. Verfahren zur Applikationsbevölkerung, **dadurch gekennzeichnet, dass** das Verfahren aufweist:
Vor-Speichern mittels einer Vorrichtung zur Applikationsbevölkerung, von Applikationen, die von einem Applikations-Geschäft bereitgestellt werden;
Erhalten mittels der Vorrichtung zur Applikationsbevölkerung, einer Applikationsanfrage, die von einem Personalcomputer, PC, Client gesendet wurde, wobei die Applikationsanfrage von dem PC Client gemäß einer mobilen Terminalinformation eines mobilen Terminals erzeugt wurde, das mit dem PC Client verbunden ist, um eine Applikation zu bestimmen, die das mobile Terminal erwerben muss;
Ermitteln, mittels der Vorrichtung zur Applikationsbevölkerung, gemäß der Applikationsanfrage, ob eine Applikation, die mit der Applikationsanfrage übereinstimmt, in der Applikationsbevölkerungsvorrichtung gespeichert ist;
dann, wenn die Applikation in der Vorrichtung zur Applikationsbevölkerung gespeichert ist, übersenden mittels der Vorrichtung zur Applikationsbevölkerung einer Applikationsinformation der Applikation an den PC Client, wobei die Applikationsinformation dazu verwendet wird, dass der PC Client die gespeicherte Applikation erwerben und an das mobile Terminal weitergeben kann;
wobei die Applikationsanfrage Übereinstimmungsparameter des mobilen Terminals umfasst, und den Schritt des Ermittelns, mittels der Vorrichtung zur Applikationsbevölkerung, gemäß der Applikationsanfrage, ob eine mit der Applikationsanfrage übereinstimmende Applikation in der Applikationsbevölkerungsvorrichtung gespeichert ist, aufweist:
Vergleichen, mittels der Vorrichtung zur Applikationsbevölkerung, der Übereinstimmungsparameter des mobilen Terminals in der Applikationsanfrage mit Applikationsinformationen aller Applikationen, die in der Vorrichtung zur Applikationsbevölkerung gespeichert sind; wenn der Vergleich erfolgreich ist, in dem eine übereinstimmende Applikation, die in der Vorrichtung zur Applikationsbevölkerung gespeichert ist als ein Ergebnis des Vergleichs gefunden wird, Bestimmen, mittels der Vorrichtung zur Applikationsbevölkerung, dass die mit der Applikationsanfrage übereinstimmende Applikation in der Vorrichtung zur Applikationsbevölkerung gespeichert ist.

2. Verfahren zur Applikationsbevölkerung nach Anspruch 1, ferner aufweisend:
dann, wenn die Applikation, die der Applikationsanfrage entspricht, nicht in der Vorrichtung zur Applikationsbevölkerung gespeichert ist, Senden mittels der Vorrichtung zur Applikationsbevölkerung einer Applikationsdownloadanfrage mit der Applikation an das Applikationsgeschäft; und
Herunterladen und Speichern gemäß der Applikationsinformation der von dem Applikationsgeschäft rückgeführten Applikation mittels der Vorrichtung zur Applikationsbevölkerung der Applikation.

3. Verfahren zur Applikationsbevölkerung nach Anspruch 2, ferner aufweisend:
nach dem Herunterladen und Speichern der Applikation, Aktualisieren und Speichern mittels der Vorrichtung zur Applikationsbevölkerung einer Applikationsliste der Applikation.

4. Verfahren zur Applikationsbevölkerung nach Anspruch 1, ferner aufweisend:
Nachsenden der Applikationsinformation der Applikation an den PC Client, Aktualisieren mittels der Vorrichtung zur Applikationsbevölkerung von Applikationsdownloadinformationen der Applikationen.

5. Verfahren zur Applikationsbevölkerung nach einem der Ansprüche 1 bis 4, ferner aufweisend:
Erhalten, mittels einer Vorrichtung zur Applikationsbevölkerung einer Speicheranfrage zur Abfrage einer Applikationsspeicherkapazität; und
gemäß der Speicherabfrageanfrageanzeigen mittels der Vorrichtung zur Applikationsbevölkerung aller gespeicherten Applikationslisten.

6. Verfahren zur Applikationsbevölkerung nach einem der Ansprüche 1 bis 4, ferner aufweisend:
Erhalten mittels der Vorrichtung zur Applikationsbevölkerung einer Downloadabfrageanfrage zum Abfragen eines Applikationsdownloads; und
gemäß der Downloadabfrageanfrage Anzeigen mittels der Vorrichtung zur Applikationsbevölkerung einer Applikationsdownloadinformation aller Applikationen.

7. Vorrichtung zur Applikationsbevölkerung (11), **dadurch gekennzeichnet, dass** die Vorrichtung aufweist:
ein Bevölkerungsmodul (112) und ein Speichermodul (111);
wobei das Bevölkerungsmodul (112) dazu eingerichtet ist, eine Applikationsanfrage zu empfangen, die von einem Personalcomputer, PC, Client gesendet wurde, wobei die Applikationsanfrage von dem PC Client gemäß einer mobilen Terminalinformation eines mobilen Terminals, das mit dem PC Client verbunden ist, um eine Applikation zu bestimmen, die das mobile Terminal erhalten muss, erzeugt wird;
wobei das Bevölkerungsmodul (112) ferner dazu eingerichtet ist, gemäß der Applikationsanfrage zu ermitteln, ob das Speichermodul (111) eine Applikation speichert, die mit der Applikationsanfrage übereinstimmt; dann, wenn die Applikation in dem Speichermodul (111) gespeichert ist, eine Applikationsinformation der Applikation an den PC Client zu senden; und
wobei das Speichermodul (111) dazu eingerichtet ist, lokal Applikationen vorzuspeichern, die von einem Applikationsgeschäft bereitgestellt werden und Applikationsinformationen einer jeden Applikation, wobei die Applikationsinformation dazu für den PC Client verwendet wird, die gespeicherte Applikation zu empfangen und an das mobile Terminal weiterzuleiten;
wobei die Applikationsanfrage Matchingparameter des mobilen Terminals umfasst, und das Bevölkerungsmodul (112) ferner dazu eingerichtet ist, wenn es gemäß der Applikationsanfrage ermittelt, ob das Speichermodul (111) eine Applikation speichert, die mit der Applikationsanfrage übereinstimmt, die Matchingparameter des mobilen Terminals in der Applikationsanfrage mit der Applikationsinformationen aller Applikationen zu vergleichen, welche in dem Speichermodul (111) gespeichert sind; und zu ermitteln, dass die Applikation, die mit der Applikationsanfrage übereinstimmt, in dem Speichermodul (111) gespeichert ist, wenn der Vergleich erfolgreich ist, in dem eine übereinstimmende Applikation, welche in dem Speichermodul (111) gespeichert ist, als ein Ergebnis des Vergleichs gefunden wird.

8. Vorrichtung zur Applikationsbevölkerung (11) gemäß Anspruch 7, ferner aufweisend ein Aktualisierungsmodul (113);
wobei das Aktualisierungsmodul (113) dazu eingerichtet ist, dann, wenn das Speichermodul (111) die Applikation entsprechend der Applikationsanfrage nicht speichert, eine Applikationsdownloadanfrage der Applikation an das Applikationsgeschäft zu senden, die Applikation herunterzuladen und an das Speichermodul (111) gemäß der Applikationsinformation der Applikation, welche von dem Applikationsgeschäft rückgeführt werden, zu übertragen; wobei das Speichermodul (111) entsprechend ferner dazu eingerichtet ist, die Applikation, welche von dem Aktualisierungsmodul (113) übertragen wird, zu speichern.

9. Vorrichtung zur Applikationsbevölkerung (11) gemäß Anspruch 8, ferner aufweisend ein Statistikmodul (114);
wobei das Statistikmodul (114) dazu eingerichtet ist, nachdem das Aktualisierungsmodul (113) die Applikation heruntergeladen hat, eine Applikationsliste der Applikation, welche von dem Speichermodul (111) gespeichert ist zu aktualisieren.

10. Vorrichtung zur Applikationsbevölkerung (11) gemäß Anspruch 9, wobei das Statistikmodul (114) ferner dazu eingerichtet ist, die Applikationsdownloadinformationen der Applikation zu aktualisieren, nachdem das Bevölkerungsmodul (112) die Applikationsinformationen der Applikation an den PC Client sendet.

11. Vorrichtung zur Applikationsbevölkerung (11) gemäß einem der Ansprüche 7 bis 10, ferner aufweisend: ein erstes Managementmodul;
wobei das erste Managementmodul dazu eingerichtet ist, eine Speicherabfrageanfrage zum Abfragen einer Applikationsspeicherkapazität zu empfangen und alle Applikationslisten, die von dem Speichermodul (111) gemäß der Speicherabfrageanfrage gespeichert sind, anzuzeigen.

12. Vorrichtung zur Applikationsbevölkerung (11) gemäß einem der Ansprüche 7 bis 10, ferner aufweisend: ein zweites Managementmodul;
wobei das zweite Managementmodul dazu eingerichtet ist, eine Downloadabfrageanfrage zum Abfragen eines Applikationsdownloads zu empfangen, und Applikationsdownloadinformationen von all den Applikationen gemäß der Downloadabfrageanfrage anzuzeigen.

13. Anordnung zur Applikationsbevölkerung (1), **dadurch gekennzeichnet, dass** die Anordnung aufweist: wenigstens ein mobiles Terminal (13) das eine Applikation verwendet, wenigstens einen Personalcomputer, PC, Client (12), und wenigstens ein Applikationsgeschäft (14), das die Applikation bereitstellt; ferner aufweisend: eine Vorrichtung zur Applikationsbevölkerung (11) gemäß einem der Ansprüche 7 bis 12.

## Revendications

1. Un procédé de vulgarisation d'applications, **caractérisé en ce que** le procédé comprend :
le pré-stockage, par un dispositif de vulgarisation d'applications, d'applications fournies par un magasin d'applications ;
la réception, par le dispositif de vulgarisation d'applications, d'une demande d'application envoyée par un ordinateur personnel, PC, client, dans lequel la demande d'application est générée par le PC client selon les informations de terminal mobile d'un terminal mobile connecté au PC client pour déterminer une application que le terminal mobile doit acquérir ;
la détection, par le dispositif de vulgarisation d'applications, en fonction de la demande d'application, si une application correspondant à la demande d'application est stockée dans le dispositif de vulgarisation d'applications ;
lorsque l'application est stockée dans le dispositif de vulgarisation d'applications, l'envoi, par le dispositif de vulgarisation d'applications, des informations d'application de l'application au PC client, dans lequel les informations d'application sont utilisées par le PC client pour acquérir et transférer l'application stockée vers le terminal mobile ;
dans lequel la demande d'application comprend des paramètres de correspondance du terminal mobile, et l'étape de détection, par le dispositif de vulgarisation d'applications, en fonction de la demande d'application, si une application correspondant à la demande d'application est stockée dans le dispositif de vulgarisation d'applications comprend :
la comparaison, par le dispositif de vulgarisation d'applications, des paramètres de correspondance du terminal mobile dans la demande d'application avec les informations d'application de toutes les applications qui sont stockées dans le dispositif de vulgarisation d'applications ; lorsque la comparaison est réussie en trouvant une application correspondante stockée dans le dispositif de vulgarisation d'applications à la suite de la comparaison, la détermination, par le dispositif de vulgarisation d'applications, que l'application correspondant à la demande d'application est stockée dans le dispositif de vulgarisation d'applications.

2. Procédé de vulgarisation d'applications selon la revendication 1, comprenant en outre :
lorsque l'application correspondant à la demande d'application n'est pas stockée dans le dispositif de vulgarisation d'applications, l'envoi, par le dispositif de vulgarisation d'applications, d'une demande de téléchargement d'application de l'application au magasin d'applications; et
en fonction des informations d'application de l'application renvoyée par le magasin d'applications, le téléchargement et le stockage, par le dispositif de vulgarisation d'applications, de l'application.

3. Procédé de vulgarisation d'applications selon la revendication 2, comprenant en outre :
après le téléchargement et le stockage de l'application, la mise à jour et le stockage, par le dispositif de vulgarisation d'applications, d'une liste d'applications de l'application.

4. Procédé de vulgarisation d'applications selon la revendication 1, comprenant en outre :
après l'envoi des informations d'application de l'application au PC client, la mise à jour, par le dispositif de vulgarisation d'applications, des informations de téléchargement d'application de l'application.

5. Procédé de vulgarisation d'applications selon l'une quelconque des revendications 1 à 4, comprenant en outre :
la réception, par le procédé de vulgarisation d'applications, d'une requête d'interrogation de stockage pour interroger une capacité de stockage d'application; et
en fonction de la requête d'interrogation de stockage, l'affichage, par le dispositif de vulgarisation d'applications, de toutes les listes d'applications stockées.

6. Procédé de vulgarisation d'applications selon l'une quelconque des revendications 1 à 4, comprenant en outre :
la réception, par le procédé de vulgarisation d'applications, d'une requête d'interrogation de téléchargement pour interroger un téléchargement d'application ; et
en fonction de la requête d'interrogation de téléchargement, l'affichage, par le dispositif de vulgarisation d'applications, des informations de téléchargement d'application de toutes les applications.

7. Dispositif de vulgarisation d'applications (11), **caractérisé en ce que** le dispositif comprend : un module de vulgarisation (112) et un module de stockage (111) ;
le module de vulgarisation (112) est configuré pour recevoir une demande d'application envoyée par un ordinateur personnel, PC, client, dans lequel la demande d'application est générée par le PC client selon les informations de terminal mobile d'un terminal mobile connecté au PC client pour déterminer une application que le terminal mobile doit acquérir ; le module de vulgarisation (112) est en outre configuré pour détecter en fonction de la demande d'application si le module de stockage (111) stocke une application correspondant à la demande d'application ; lorsque l'application est stockée dans le module de stockage (111), pour envoyer les informations d'application de l'application au PC client ; et
le module de stockage (111) est configuré pour pré-stocker localement des applications fournies par un magasin d'applications et des informations d'application de chaque application, dans lequel les informations d'application sont utilisées par le PC client pour acquérir et transférer l'application stockée vers le terminal mobile ;
dans lequel la demande d'application comprend des paramètres de correspondance du terminal mobile, et le module de vulgarisation (112) est en outre configuré, lors de la détection en fonction de la demande d'application, si le module de stockage (111) stocke une application correspondant à la demande d'application, pour comparer les paramètres de correspondance du terminal mobile dans la demande d'application avec les informations d'application de toutes les applications qui sont stockées dans le module de stockage (111); et pour déterminer que l'application correspondant à la demande d'application est stockée dans le module de stockage (111) lorsque la comparaison est réussie en trouvant une application correspondante stockée dans le module de stockage (111) à la suite de la comparaison.

8. Dispositif de vulgarisation d'applications (11) selon la revendication 7, comprenant en outre un module de mise à jour (113) ;
le module de mise à jour (113) est configuré, lorsque le module de stockage (111) ne stocke pas l'application correspondant à la demande d'application, pour envoyer une demande de téléchargement d'application de l'application au magasin d'applications, pour télécharger et transmettre l'application au module de stockage (111) en fonction des informations d'application de l'application renvoyée par le magasin d'applications ;
en conséquence, le module de stockage (111) est en outre configuré pour stocker l'application transmise par le module de mise à jour (113).

9. Dispositif de vulgarisation d'applications (11) selon la revendication 8, comprenant en outre un module de statistiques (114) ;
le module de statistiques (114) est configuré, après le téléchargement de l'application par le module de mise à jour (113), pour mettre à jour une liste d'applications de l'application stockée par le module de stockage (111).

10. Dispositif de vulgarisation d'applications (11) selon la revendication 9, dans lequel le module de statistiques (114) est en outre configuré, après que le module de vulgarisation (112) a envoyé les informations d'application de l'application au PC client, pour mettre à jour les informations de téléchargement d'application de l'application.

11. Dispositif de vulgarisation d'applications (11) selon l'une quelconque des revendications 7 à 10, comprenant en outre: un premier module de gestion ;
le premier module de gestion est configuré pour recevoir une requête d'interrogation de stockage pour interroger une capacité de stockage d'application, et pour afficher toutes les listes d'applications stockées par le module de stockage (111) en fonction de la requête d'interrogation de stockage.

12. Dispositif de vulgarisation d'applications (11) selon l'une quelconque des revendications 7 à 10, comprenant en outre: un second module de gestion ;
le second module de gestion est configuré pour recevoir une requête d'interrogation de téléchargement, et pour afficher les informations de téléchargement d'application de toutes les applications en fonction de la requête d'interrogation de téléchargement.

13. Système de vulgarisation d'applications (1), **caractérisé en ce que** le système comprend : au moins un terminal mobile (13) utilisant une application, au moins un ordinateur personnel, PC, client (12) et au moins un magasin d'applications (14) fournissant l'application ; comprenant en outre : un dispositif de vulgarisation d'applications (11) selon l'une quelconque des revendications 7 à 12.
